# EUROPÄISCHE PATENTSCHRIFT

(11) **EP 2 419 634 B1**
(45) Veröffentlichungstag und Bekanntmachung des Hinweises auf die Patenterteilung: **17.02.2016**
(21) Anmeldenummer: 10705976.8
(22) Anmeldetag: 19.02.2010
(51) Int. Cl.: F03G 6/06

(54) **DAMPFKRAFTWERK MIT SOLARKOLLEKTOREN**
STEAM POWER PLANT HAVING SOLAR COLLECTORS
CENTRALE THERMIQUE À VAPEUR COMPORTANT DES CAPTEURS SOLAIRES

(30) Priorität: 18.04.2009 DE 102009018027; 02.12.2009 DE 102009056707
(43) Veröffentlichungstag der Anmeldung: 22.02.2012
(73) Patentinhaber: ALSTOM Technology Ltd, 5401 Baden (CH)
(72) Erfinder: UNGERER, Bjoern, 76669 Bad Schönborn (DE); KITZMANN, Ewald, 69469 Weinheim (DE); SCHUELE, Volker, 69181 Leimen (DE)
(74) Vertreter: General Electric Technology GmbH
(86) Internationale Anmeldenummer: PCT/EP2010/001037
(87) Internationale Veröffentlichungsnummer: WO 2010/118796

(56) Entgegenhaltungen:
- EP-A1- 0 526 816
- EP-A1- 2 037 192
- US-A1- 2007 157 614
- MARKO A: "VERBESSERUNG FOSSILGEFEUERTER DAMPFKRAFTWERKE DURCH SOLARE WAERMEZUFUHR", BWK BRENNSTOFF WARME KRAFT, SPRINGER VDI VERLAG, DUSSELDORF, DE, Bd. 47, Nr. 7/08, 1. Juli 1995 (1995-07-01), Seiten 303-308, XP000520839, ISSN: 1618-193X

## Beschreibung

Konventionelle Dampfkraftwerke haben einen geschlossenen Wasser-Dampfkreislauf, dem im Dampferzeuger durch das Verbrennen eines fossilen Brennstoffs dem Kesselspeisewasser Energie zugeführt wird, so dass es in den dampfförmigen Aggregatzustand übergeht. Dieser Dampf treibt über eine oder mehrere Dampfturbinen einen Generator an und wird anschließend in einem Kondensator wieder verflüssigt.

Es hat in der Vergangenheit Versuche gegeben, in den Wasser-Dampf-Kreislauf eines fossil befeuerten Dampfkraftwerks thermische Energie einzukoppeln, und dadurch die elektrische Leistung zu erhöhen und/oder den Brennstoffverbrauch zu verringern.

So ist es beispielsweise aus der US 4,069,674 bekannt, einen Teilstrom des Kondensats in Solarkollektoren vorzuwärmen und danach wieder in den Vorwärmerstrang einzubinden. Bei diesem Verfahren werden alle Vorwärmer umfahren. Dies bedeutet, dass der Teilkondensatstrom vor dem ersten Vorwärmer abgezweigt wird und, nachdem er die Solarkollektoren durchströmt hat, wird der solar vorgewärmte Teilstrom des Kondensats nach dem letzten Vorwärmer wieder in den Haupt-Kondensatstrom eingekoppelt.

Da der solar vorgewärmte Teilstrom die gleiche Temperatur aufweisen muss, wie der in den Vorwärmern vorgewärmte HauptKondensatstrom, ergibt sich daraus eine große Temperaturspreizung des Teil-Kondensatstrom in den Solarkollektoren. Diese große Temperaturspreizung ist nur an wenigen Tagen im Jahr beziehungsweise in wenigen Stunden im Jahr erreichbar, so dass der Beitrag der Solarkollektoren zur Vorwärmung des Kondensats relativ gering ist.

Aus der US 2008/0034757 A1 ist ein ähnliches Verfahren bekannt, bei dem in Reihe mit den Vorwärmern ein Wärmetauscher vorgesehen ist. In diesem Wärmetauscher wird das Kondensat durch ein Thermoöl, welches wiederum von Solarkollektoren erhitzt wurde, erwärmt.

Nachteilig an diesem Verfahren ist, dass durch die serielle Anordnung des Wärmetauschers ein zusätzlicher Druckverlust im Wasserdampfkreislauf entsteht, auch wenn - zum Beispiel mangels ausreichender Solarstrahlung - keine Wärme über diesen Wärmetauscher eingekoppelt wird. Des Weiteren ist dieses System vergleichsweise unflexibel, so dass nur bei optimaler Solarstrahlung ein nennenswerter Beitrag von den Solarkollektoren geliefert werden kann. Des Weiteren sind die Herstellungskosten relativ hoch, da alle Komponenten hochdruckfest ausgelegt werden müssen.

Aus der WO97/14887 ist ein Verfahren bekannt, bei dem in einem Feld von Solarkollektoren Nassdampf erzeugt wird, der direkt in die Abscheideflasche beziehungsweise die Trommel des Dampferzeugers eingespeist werden kann. Nachteilig an diesem Verfahren ist, dass die Einkopplung von solarer Wärmeenergie nur auf einem festgelegten Temperaturniveau ist und die Nachrüstung einen Eingriff in den Dampferzeuger erfordert.

Aus der US 2007/157614 A1 ist eine Dampfkraftwerk bekannt in dessen Dampfkreislauf sowohl thermische Energie aus Brennstoffen als auch Solarenergie eingekoppelt werden kann.

Zusammenfassend lässt sich feststellen, dass diese aus dem Stand der Technik bekannten Dampfkraftwerke mit solarthermischer Unterstützung eine nur geringe Flexibilität bezüglich der Temperaturen bei denen Solarenergie in den Wasser-Dampf-Kreislauf eingekoppelt werden kann aufweisen. Daraus resultiert ein vergleichsweise geringer Anteil von Solarenergie an der Erzeugung elektrischer Energie.

Der Erfindung liegt die Aufgabe zugrunde, ein Dampfkraftwerk und ein Verfahren bereitzustellen, die einen größeren Beitrag der Solarstrahlung an der Stromerzeugung eines Dampfkraftwerks mit fossilem Dampferzeuger ermöglicht.

Gleichzeitig soll das erfindungsgemäße Kraftwerk einfach an verschiedene geographische Verhältnisse und Umgebungsbedingungen angepasst werden können. Ebenfalls soll die Nachrüstung bestehender Kraftwerke möglich sein sowie Verfügbarkeit und Zuverlässigkeit des Kraftwerks unverändert hoch bleiben.

Diese Aufgabe wird erfindungsgemäß bei einem Dampfkraftwerk umfassend einen Kessel, eine Turbine, einen Kondensator und mindestens einen Vorwärmer dadurch gelöst, dass parallel zu einem oder mehreren Vorwärmern mindestens ein Wärmetauscher vorgesehen ist, und dass in dem mindestens einen Wärmetauscher Wärme von einem oder mehreren Solarkollektoren auf den durch den mindestens einen Wärmetauscher strömenden Teilstrom des Kondensats übertragen wird.

Dadurch, dass erfindungsgemäß der Wärmetauscher, mit dessen Hilfe solar gewonnene Wärme in das Dampfkraftwerk eingekoppelt wird, parallel zu einem oder mehreren der Vorwärmern geschaltet ist, kann die Einbindung beziehungsweise die Einkopplung der Solarenergie bei verschiedenen Temperaturniveaus erfolgen.

Wenn beispielsweise mehrere nicht konzentrierende Solarkollektoren eingesetzt werden, dann empfiehlt es sich, die Solarenergie bei niedrigen Temperaturen, das heißt, im Bereich der ersten Vorwärmer nach dem Kondensator einzukoppeln. Wenn jedoch konzentrierende Solarkollektoren eingesetzt werden, dann ist es vorteilhafter, die von diesen Hochtemperatur-Solarkollektoren erzeugte Wärme bei einem höheren Temperatur-Niveau in den Dampfkreislauf einzukoppeln, indem der Wärmetauscher parallel zu einem oder mehreren Vorwärmern angeordnet wird, die sich unmittelbar vor dem Dampferzeuger oder dem Economizer befinden.

Erfindungsgemäß ist es auch möglich, dass mehrere in Reihe geschaltete Vorwärmer, insbesondere Niederdruck-Vorwärmer oder Hochdruck-Vorwärmer, vorgesehen sind, und dass der mindestens eine Wärmetauscher parallel zu einem oder mehreren der Vorwärmer schaltbar ist. Dadurch ist es möglich, abhängig von der momentan verfügbaren Solarstrahlung, die gewonnene Solarenergie dort in den Wasserdampfkreislauf einzukoppeln, wo das durch die Vorwärmer strömende Kondensat in etwa die gleiche Temperatur hat, wie die in den Solarkollektoren erzielbare Temperatur.

Es ist auch möglich, diesen einen Wärmetauscher beispielsweise parallel zu zwei Vorwärmern zu schalten, so dass die Temperaturspreizung erhöht wird. Des Weiteren ist es auch möglich, bei laufendem Betrieb, abhängig von der verfügbaren Solarstrahlung und der daraus resultierenden Temperatur des die Solarkollektoren durchströmenden Wärmeträgers den Wärmetauscher im Laufe des Tages an wechselnden Stellen aus dem Haupt-Speisewasserstrom aus und/oder einzukoppeln. Dadurch kann über den ganzen Tag trotz wechselnder Leistungsfähigkeit der Solarkollektoren die Solarenergie bestmöglich in den Wasser-Dampf-Kreislauf eingekoppelt werden.

Dadurch kann der Beitrag der Solarkollektoren zur Erwärmung des Speisewassers und die Wirtschaftlichkeit des erfindungsgemäßen Kraftwerks deutlich erhöht werden. Außerdem ist es möglich, trotz einer vergleichsweise geringen Zahl von Wärmetauschern und einer vergleichsweise geringen Übertragungsleistung der Wärmetauscher einen signifikanten Beitrag der Solarkollektoren zur Energiezufuhr in den Wasserdampfkreislauf des Kraftwerks sicherzustellen.

Durch die Parallelschaltung ist es auch möglich, in den Betriebszeiten, in denen keine Solarstrahlung verfügbar ist, das fossile Dampfkraftwerk ohne zusätzliche Strömungswiderstände oder Beeinträchtigungen des Wirkungsgrads zu betreiben.

Die eingangs genannte Aufgabe wird bei einem Dampfkraftwerk umfassend einen Kessel, einen Überhitzer und/oder einen oder mehrere Zwischenüberhitzer, eine Turbine und einen Kondensator, wobei zur Regelung der Frischdampftemperatur und/oder zur Regelung der Temperatur des überhitzten Dampfkondensats, welches über eine Speisewasserleitung entnommen wird, in den Überhitzer und/oder die Zwischenüberhitzer eingespritzt wird, dadurch gelöst, dass parallel zu der Speisewasserleitung ein dritter Wärmetauscher vorgesehen ist, und dass in dem dritten Wärmetauscher Wärme von einem oder mehreren Solarkollektoren auf das Speisewasser übertragbar ist.

Dadurch ist es erfindungsgemäß auch möglich, das Kondensat, welches zur Regelung der Temperatur des Frischdampfs beziehungsweise des in den Zwischenüberhitzern überhitzten Dampfs zu regeln. Dabei gilt: Je höher die Temperatur des Kondensats ist, desto mehr Einspritzwasser kann in den überhitzten Dampf eingebracht werden, um die gewünschten Dampfparameter einzustellen. Dies bedeutet auch, dass durch die solarthermische Temperaturanhebung des Speisewassers der Dampferzeuger (1) bei gleicher Kraftwerksleistung weniger Brennstoff benötigt, so dass auch hier wieder ein signifikanter Beitrag der in den Solarkollektoren gewonnenen Wärme zur Stromerzeugung erreicht werden kann.

Durch die flexible Anordnung beziehungsweise das Einbringen des in den Solarkollektoren erzeugten Wärme in den Überhitzter beziehungsweise einen oder mehrere Zwischenüberhitzer ist es auch hier wieder möglich flexibel und entsprechend der momentanen Leistungsfähigkeit der Solarkollektoren die Einkopplung der in den Solarkollektoren gewonnenen Wärme zu maximieren. Dadurch wird der Beitrag der Solarstrahlung an der Stromerzeugung erhöht und entsprechend der Brennstoffbedarf reduziert und/oder die Leistung erhöht.

Alternativ oder zusätzlich ist es auch möglich, in einem Kraftwerk umfassend einen Kessel, eine Turbine, einen Kondensator, eine Speisewasserpumpe und eine mit Dampf betriebene Speisewasserpumpen-Antriebsturbin und eine Dampfleitung zwischen der Turbine und der Speisewasser-Antriebsturbine, in der Dampfleitung einen vierten Wärmetauscher vorzusehen und in dem vierten Wärmetauscher die in einem oder mehreren Solarkollektoren gewonnene Wärme auf den in der Dampfleitung strömenden Dampf zu übertragen.

Dadurch kann der von der Turbine abgezapfte Dampf mit Hilfe der Solarkollektoren überhitzt werden, was zu einer entsprechenden Leistungssteigerung der Speisewasserpumpen-Antriebsturbine führt. Da die Leistung der Speisewasserpumpen-Antriebsturbine durch den Betriebspunkt des Kraftwerks vorgegeben ist, kann entsprechend weniger Dampf von der Turbine abgezapft werden, so dass in entsprechender Weise die elektrische Leistung des Kraftwerks zunimmt und/oder der Brennstoffverbrauch abnimmt.

Eine weitere vorteilhafte Ausgestaltung des erfindungsgemäßen Kraftwerks sieht einen Kessel, eine Turbine und einen Kondensator vor, wobei der Kondensator von einem Kühlmedium, insbesondere von Wasser, welches beispielsweise in einem Kühlturm oder in einem Fluss gekühlt wird, durchströmt wird, wobei das Kühlmedium erfindungsgemäß vor dem Eintritt in den Kondensator mittels einer solarbetriebenen Absorptionskältemaschine kühlbar ist.

Dadurch wird die Temperatur mit der das Kühlmedium in den Kondensator eintritt abgesenkt. Infolgedessen sinkt auch der Druck im Kondensator ab, so dass das Druckgefälle erhöht wird, welches der Dampfturbine zur Umwandlung in mechanische Arbeit zur Verfügung steht. Infolgedessen steigt bei gleichem Dampfdurchsatz die Leistung der Turbine. Da naturgemäß immer dann die Kühlleistung der Absorptionskältemaschine maximal ist, wenn die Solarstrahlung sehr hoch ist, und gleichzeitig aufgrund der erhöhten Umgebungstemperatur das Kühlmedium vor dem Eintritt in den Kondensator eine vergleichsweise hohe Temperatur hätte, ist diese Maßnahme dann besonders wirksam, wenn das Kraftwerk aufgrund der erhöhten Umgebungstemperatur einen verringerten Wirkungsgrad und eine reduzierte Leistung hat.

Je nach Temperaturniveau und sonstigen Randbedingungen können für die erfindungsgemäßen Dampfkraftwerke als Solarkollektoren konzentrierende Kollektoren, wie beispielsweise Parabolrinnenkollektoren, Fresnel-Kollektoren oder Turm-Receiver mit einem Heliostaten-Feld, oder nicht konzentrierende Kollektoren, insbesondere Flachkollektoren oder Vakuumröhrenkollektoren, eingesetzt werden.

Auch hier zeigt sich wieder die Flexibilität des erfindungsgemäßen Dampfkraftwerks, da nicht nur auf die lokal am Standort des Kraftwerks vorhandene Solarstrahlung bestmöglich berücksichtigt werden kann, sondern auch die Preise und das Betriebsverhalten verschiedenster Solarkollektoren bei der Auslegung des erfindungsgemäße Dampfkraftwerks berücksichtigt werden kann.

Als Wärmeträger für die Solarkollektoren und die Wärmeseite des Wärmetauschers kann erfindungsgemäß Wasser oder Thermoöl eingesetzt werden. Auch dies hängt wiederum von den Betriebstemperaturen der Solarkollektoren ab, so dass auch hinsichtlich des Wärmeträgers eine maximale Flexibilität vorhanden ist.

Die der Erfindung zugrundeliegende Aufgabe wird ebenfalls durch Verfahren der nebengeordneten Ansprüche 8 ff. gelöst. Dabei werden die bereits zuvor beschriebenen Vorteile realisiert.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Merkmale können sowohl einzeln als auch in beliebiger Kombination miteinander erfindungswesentlich sein.

### Zeichnung

Es zeigen:
- Figur 1: Ein Schaltbild eines konventionellen Dampfkraftwerks,
- Figuren 2 und 3: Ausführungsbeispiele erfindungsgemäßer Dampfkraftwerke,
- Figur 4: den Beitrag von an verschiedenen Stellen des Dampfkraftwerks eingekoppelter Solarenergie und
- Figuren 5 bis 13: Ausführungsbeispiele erfindungsgemäßer Dampfkraftwerke.

### Beschreibung der Ausführungsbeispiele

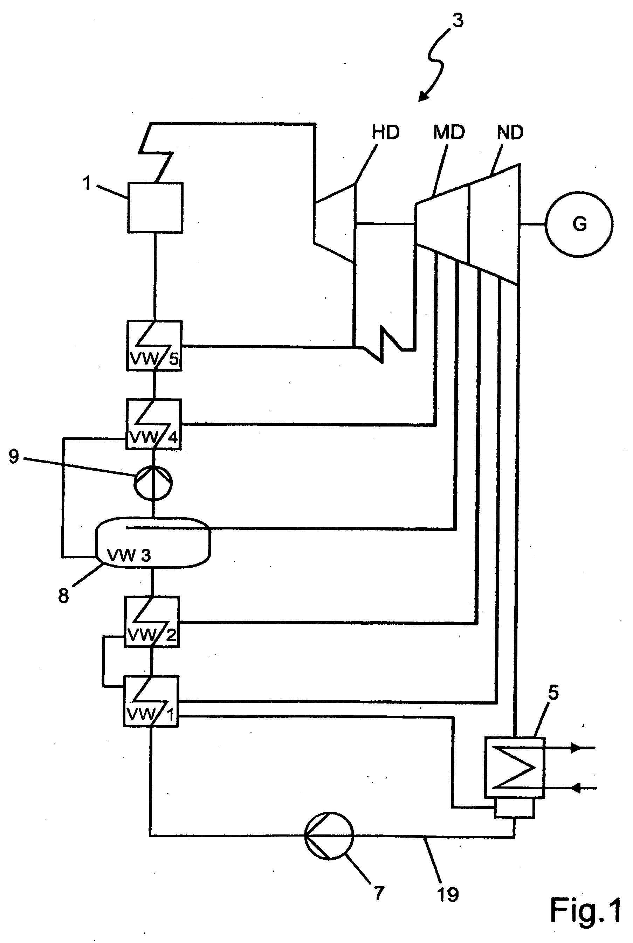

In Figur 1 ist ein konventionelles fossil oder mit Biomasse gefeuertes Dampfkraftwerk als Blockschaltbild dargestellt. Die Figur 1 dient im Wesentlichen dazu, die einzelnen Baugruppen des Kraftwerks zu bezeichnen und den Gesamtzusammenhang des Wasser-Dampf-Kreislaufs darzustellen, da aus Gründen der Übersichtlichkeit in den nachfolgenden Figuren nur die erfindungswesentlichen Teile des Wasser-Dampf-Kreislaufs dargestellt werden.

In einem Dampferzeuger 1 wird unter Zuhilfenahme fossiler Brennstoffe oder mittels Biomasse aus dem Speisewasser Frischdampf erzeugt, der in einer Dampfturbine 3 entspannt wird und dadurch einen Generator G antreibt. Die Turbine 3 kann in einen Hochdruckteil HD, einen Mitteldruckteil MD und mehrere Niederdruckteile ND aufgeteilt sein.

Nachdem der Dampf in der Turbine 3 entspannt wurde, strömt er in einen Kondensator 5 und wird dort verflüssigt. Zu diesem Zweck wird dem Kondensator 5 ein in aller Regel flüssiges Kühlmedium, wie zum Beispiel Kühlwasser, zugeführt. Dieses Kühlwasser wird in einem Kühlturm (nicht dargestellt) oder durch einen in der Nähe des Kraftwerks befindlichen Fluss (nicht dargestellt) abgekühlt, bevor es in den Kondensator 5 eintritt.

Das im Kondensator 5 entstandene Kondensat wird von einer Kondensatpumpe 7 zu mehreren Vorwärmern VWᵢ, mit i = 1 ... n, gefördert. In dem gezeigten Ausführungsbeispiel ist nach dem zweiten Vorwärmer VW2 ein Speiswasserkessel 8 angeordnet. Nach dem Speiswasserkessel 8 ist eine Speisewasserpumpe 9 vorgesehen.

Im Zusammenhang mit der Erfindung ist von Bedeutung, dass das Speisewasser aus dem Kondensator 5 beginnend mit im ersten Vorwärmer VW1 bis zum letzten Vorwärmer VW5 mit Dampf vorgewärmt wird. Dabei steigt die Temperatur des Kondensats beziehungsweise Speisewassers von Vorwärmer zu Vorwärmer und entsprechend muss auch die Temperatur des zur Vorwärmung genutzten Dampfs zunehmen.

Im dargestellten Beispiel werden die Vorwärmer VW1 und VW2 mit Dampf aus dem Hochdruckteil HD der Dampfturbine 3 geheizt, während der letzte Vorwärmer VW5 mit Dampf aus dem Niederdruckteil ND der Dampfturbine 3 geheizt wird.

Der im Speiswasserbehälter 8 ausgebildete dritte Vorwärmer VW3 wird mit Dampf aus dem Mitteldruckteil MD der Turbine 3 erwärmt.

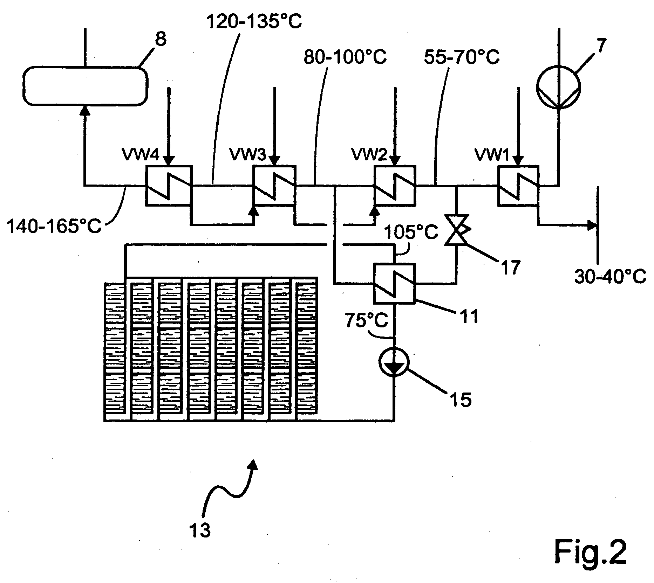

In Figur 2 ist ein erstes Ausführungsbeispiel eines erfindungsgemäßen Dampfkraftwerks dargestellt. Dabei werden die im Zusammenhang mit der Figur 1 benannten benutzen Bezugszeichen verwendet.

In Figur 2 sind insgesamt vier Vorwärmer VW1 bis VW4 zwischen der Kondensatpumpe 7 und dem Speisewasserbehälter 8 angeordnet. Dies sind die sogenannten Niederdruckvorwärmer.

Wie aus Figur 2 ersichtlich, tritt das Kondensat bei einer Temperatur von 30° bis 40°C in den ersten Vorwärmer VW1 ein und wird dort auf eine Austritts-Temperatur von 55°C bis etwa 70° C mit Hilfe von Dampf aus der Dampfturbine 3 (siehe Figur 1) vorgewärmt. Die Zufuhr von Dampf ist in Figur 2 durch Pfeile ohne Bezugszeichen angedeutet.

Die Temperaturspreizung des zweiten Vorwärmers VW2 zwischen Eintrittstemperatur und Austrittstemperatur liegt zwischen 55°C und 70°C als Eintrittstemperatur und 80°C und 100°C als Austrittstemperatur. Im dritten Vorwärmer VW3 wird dieses Kondensat von 80 bis 100°C auf 120 bis 135°C erhitzt, und im vierten Vorwärmer VW4 wird es weiter erhitzt auf 140 bis 160°C.

Erfindungsgemäß ist nun vorgesehen, parallel zu dem zweiten Vorwärmer VW2 einen ersten Wärmetauscher 11 anzuordnen. Dabei kann ein Teil des Kondensatstroms im Bypass zu dem zweiten Vorwärmer VW2 durch den ersten Wärmetauscher 11 geführt werden.

Der erste Wärmetauscher 11 wird von einem Wärmeträger, beispielsweise Wasser, durchströmt, das in einem Kollektorfeld 13 mit Hilfe der Solarstrahlung erwärmt wird. Bei den genannten Temperaturen von etwa 55 bis maximal 100°C haben sich für das Kollektorfeld 13 Flach- oder Vakuumröhrenkollektoren als besonders effizient erwiesen. So kann beispielsweise in einem solchen Kollektorfeld 13 der Wärmeträger auf der Eintrittsseite in den ersten Wärmetauscher 11 auf eine Temperatur von beispielsweise von 105°C erhitzt werden und tritt mit etwa 75°C aus dem ersten Wärmetauscher aus.

Selbstverständlich ist, um den Wärmeträger umwälzen zu können, in den Wärmeträgerkreislauf eine Umwälzpumpe 15 angeordnet. Die Fördermenge der Umwälzpumpe 15 wird so geregelt, dass der Wärmeträger beim Eintritt in den ersten Wärmetauscher 11 die gewünschte Temperatur hat.

Der Teilstrom des Kondensats, der durch den ersten Wärmetauscher 11 strömt, wird in Abhängigkeit der momentanen Leistung des Kollektorfelds 13 so geregelt, dass das Kondensat beim Austritt aus dem ersten Wärmeträger 11 die gleiche Temperatur hat wie der Hauptkondensatstrom, der durch den zweiten Vorwärmer VW2 strömt. Zu diesem Zweck ist ein Stromregelventil 17 in den Bypass des zweiten Vorwärmers VW2 eingebaut.

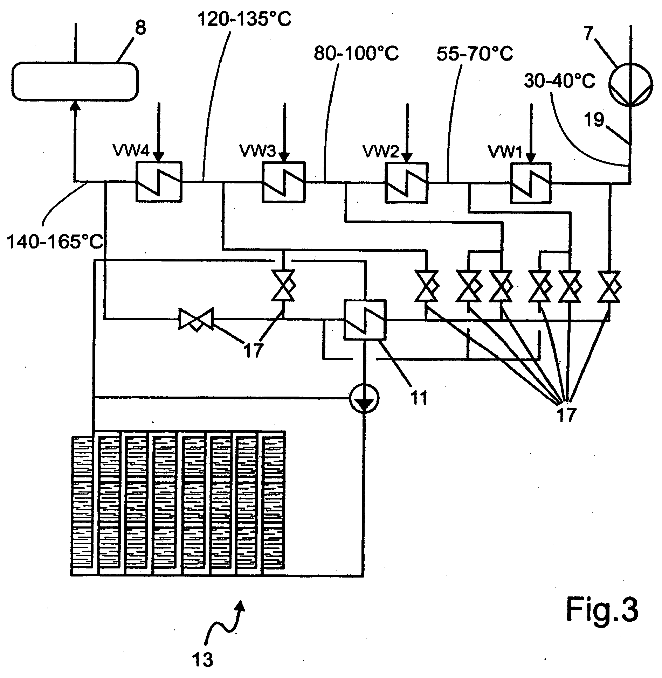

Es versteht sich von selbst, dass beispielsweise in Ländern mit hoher Solarstrahlung und günstiger Ausrichtung des Kollektorfelds 13 eine höhere Austrittstemperatur erzielt werden kann als die 105°C, die beispielhaft in Figur 3 auf der Eintrittsseite des Wärmeträgers in den ersten Wärmetauscher 11 eingetragen sind. Dann wäre es möglich, den ersten Wärmetauscher 11 parallel zum dritten Vorwärmer 3, der ja bei höheren Temperaturen als der zweite Vorwärmer VW2 arbeitet, zu schalten.

Selbstverständlich wäre es bei geringerem Solarstrahlungsangebot auch möglich, den ersten Wärmetauscher 11 parallel zum ersten Vorwärmer VW1 anzuordnen. Dies bedeutet, dass der Wärmeträger in dem Kollektorfeld nur auf 75 °C erwärmt werden müsste. Das erfindungsgemäße Konzept hat somit eine sehr große Flexibilität hinsichtlich der Solarstrahlung. Es ist auch möglich, weil der erste Wärmetauscher 11 parallel zu einem Vorwärmer VWi geschaltet ist, den ersten Wärmetauscher 11 und das Kollektorfeld 13 bei einem bereits in Betrieb befindliche Dampfkraftwerke nachzurüsten.

Die Flexibilität des erfindungsgemäßen Systems wird ganz besonders deutlich anhand der Figur 3. Der wesentliche Unterschied zwischen den Ausführungsbeispielen gemäß Figur 2 und Figur 3 besteht darin, dass zwischen der Kondensatpumpe 7 und dem ersten Wärmetauscher Vorwärmer VW1 sowie zwischen allen Vorwärmern und dem vierten Vorwärmer 4 und dem Speisewasserkessel 8 jeweils eine Bypassleitung (ohne Bezugszeichen) von einer (Haupt)-Speisewasserleitung 19 abzweigt, und in jeder Bypass-Leitung mindestens ein Wegeventil 17 vorgesehen ist. Wie sich aus der Figur 3 ergibt, ist es durch die dargestellte Verschaltung möglich, den ersten Wärmetauscher 11 parallel zu entweder dem ersten Vorwärmer VW1, dem zweiten Vorwärmer VW2, dem dritten Vorwärmer VW3 oder dem vierten Vorwärmer VW4 zu schalten. Da alle Stromventile 17 steuerbar sind, ist es auch möglich, bei laufendem Betrieb des Dampfkraftwerks zum Beispiel am Morgen, wenn die Sonneneinstrahlung noch gering ist, den ersten Wärmetauscher 11 zunächst parallel zum ersten Vorwärmer VW1 zu betreiben. Mit zunehmend intensiverer Solareinstrahlung kann dann der erste Wärmetauscher 11 nacheinander parallel zu den Vorwärmern VW2, VW3 und VW4 betrieben werden.

Dabei sieht die in Figur 3 dargestellte Schaltung auch vor, dass der erste Wärmetauscher 11 beispielsweise parallel zu dem ersten Vorwärmer VW1 und dem zweiten Vorwärmer VW2 betrieben wird. Dies bedeutet, dass der Teilstrom, der durch den ersten Wärmetauscher 11 strömt, eine Temperaturspreizung ausgehend von einer Eintrittstemperatur von 30 bis 40°C bis auf 80 bis 100°C erfährt. Dies ist naturgemäß nur mit einem sehr leistungsfähigen Kollektorfeld 13 möglich. Selbstverständlich wäre es auch möglich, den ersten Wärmetauscher 11 parallel zu den Vorwärmern VW2 bis VW4 zu schalten. Es sind hier wie sich aus dem Blockschaltbild gemäß Figur 3 ergibt, alle Kombinationen von einem oder mehreren Vorwärmern möglich.

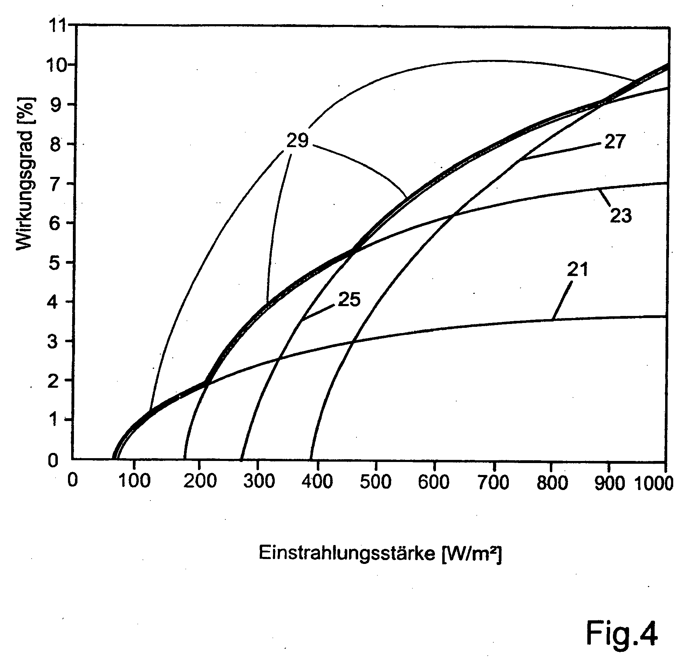

Die Vorteile dieser flexiblen Parallelschaltung des ersten Wärmetauschers 11 zu einem oder mehreren der Vorwärmer VW1 bis VW4 ist auch aus Figur 4 ersichtlich.

Dabei wird als Wirkungsgrad das Verhältnis von (elektrischer) Mehrleistung am Generator zur auf die Solarkollektoren einstrahlenden Solarstrahlungsleistung definiert. Beispiel: Bei 500 W/m2 spezifischer Strahlungsleistung auf 20.000 m2 ergibt sich eine Solarleistung von 10 MW. Bringt man diese Leistung in den Wasser-Dampf-Kreislauf ein und erzielt dadurch am Generator eine Mehrleistung von 3 MW, so beträgt der Wirkungsgrad 30%.

In der Figur 4 ist der Wirkungsgrad über der flächenspezifischen Leistung der Solarstrahlung [W/m²] für verschiedene erfindungsgemäße Varianten der Einkopplung von solar gewonnener Wärme in den Wasser-Dampfkreislauf des Kraftwerks aufgetragen. So ist einmal die Einkopplung mit Hilfe des ersten Wärmetauschers 11 parallel zum ersten Vorwärmer 1 mit einer ersten Linie 21 dargestellt. Aus dem Verlauf dieser Linie wird deutlich, dass die Solarenergienutzung schon bei vergleichsweise geringer Solarstrahlung von etwa 200 w/m² über 2 % zur Wärmelieferung beiträgt.

Bei deutlich höherer Strahlungsleistung (zum Beispiel von 1.000 W/m²) steigt der Beitrag auf maximal 3,3 % in dem der Figur 4 zu Grunde gelegten Beispiel. Das heißt, dass diese Schaltung bei niedriger Strahlungsleistung besonders effizient arbeitet und bei höheren Strahlungsleistungen der Beitrag nur noch in relativ geringem Umfang zunimmt.

Die zweite Linie 23 stellt die Erhöhung des Wirkungsgrads dar, wenn der erste Wärmetauscher 11 parallel zum zweiten Vorwärmer VW2 geschaltet wird. Aus dem Verlauf der zweiten Linie 23 wird deutlich, dass die Solarenergienutzung erst bei einer Solarstrahlung von etwa 200 w/m² beginnt und bis zu 7% betragen kann, bei einer Strahlungsleistung von 1.000 W/m².

Die dritte Linie 25 stellt die Erhöhung des Wirkungsgrads dar, wenn der erste Wärmetauscher 11 parallel zum dritten Vorwärmer VW3 geschaltet wird. Aus dem Verlauf der dritten Linie 25 wird deutlich, dass die Solarenergienutzung erst bei einer Solarstrahlung von etwa 270 w/m² beginnt und bis über 9% betragen kann, bei einer Strahlungsleistung von 1.000 W/m².

Die vierte Linie 27 stellt die Erhöhung des Wirkungsgrads dar, wenn der erste Wärmetauscher 11 parallel zum vierten Vorwärmer VW4 geschaltet wird. Aus dem Verlauf der vierten Linie 27 wird deutlich, dass die Solarenergienutzung erst bei einer Solarstrahlung von etwa 370 w/m² beginnt und bis über 10% betragen kann, bei einer Strahlungsleistung von 1.000 W/m².

Die Wirkungsgraderhöhung aufgrund der erfindungsgemäßen variablen Einbindung des ersten Wärmetauschers 11 entsprechend der verfügbaren Solarstrahlung ist durch die fünfte Linie 29 dargestellt. Daraus ergibt sich ein maximaler Wirkungsgrad über den gesamten Bereich der Solarstrahlung von 200 W/m² bis etwa 1000 W/m², obwohl der erste Wärmetauscher 11 bei allen dargestellten Varianten gleich ist. Um die erfindungsgemäße variable Einkopplung der Solarenergie realisieren zu können, bedarf es lediglich einiger Rohrleitungen und Stromventile 17 (siehe Fig. 3), so dass die Wirtschaftlichkeit dieser Variante sehr hoch ist.

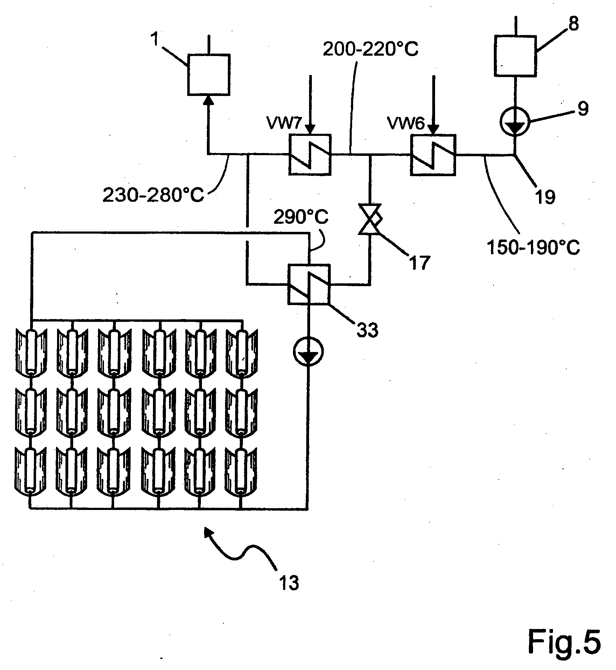

In Figur 5 ist ein Teil eines Blockschaltbilds eines erfindungsgemäßen Dampfkraftwerks dargestellt, bei dem die Vorwärmer VW6 und VW7 sogenannte Hochdruckvorwärmer sind, da sie stromabwärts der Kesselspeisepumpe 9 und vor dem Dampferzeuger 1 angeordnet sind.

Die hydraulische Schaltung ist im Prinzip gleich wie bei dem Ausführungsbeispiel gemäß Figuren 2 und 3. Allerdings ist die Eintrittstemperatur des Speisewassers vor dem Eintritt in den Vorwärmer VW6 bei etwa 150 bis 190°C und verlässt den sechsten Vorwärmer VW6 bei Temperaturen von 200 bis 220°C. Die entsprechende Austrittstemperatur des siebten Vorwärmers VW7 beträgt 230 bis 280°C. Bei dem Ausführungsbeispiel gemäß Figur 5 ist ein zweiter Wärmetauscher 33 parallel zum siebten Vorwärmer VW7 geschaltet, so dass entsprechend hohe Temperaturen von dem Wärmeträger des Kollektorfelds 13 in den zweiten Wärmetauscher 33 übertragen werden müssen.

Bei diesem Ausführungsbeispiel ist es erforderlich, die einzelnen Kollektoren des Kollektorfelds als konzentrierende Kollektoren, wie zum Beispiel Parabolrinnen-Kollektoren oder Fresnel-Kollektoren auszubilden.

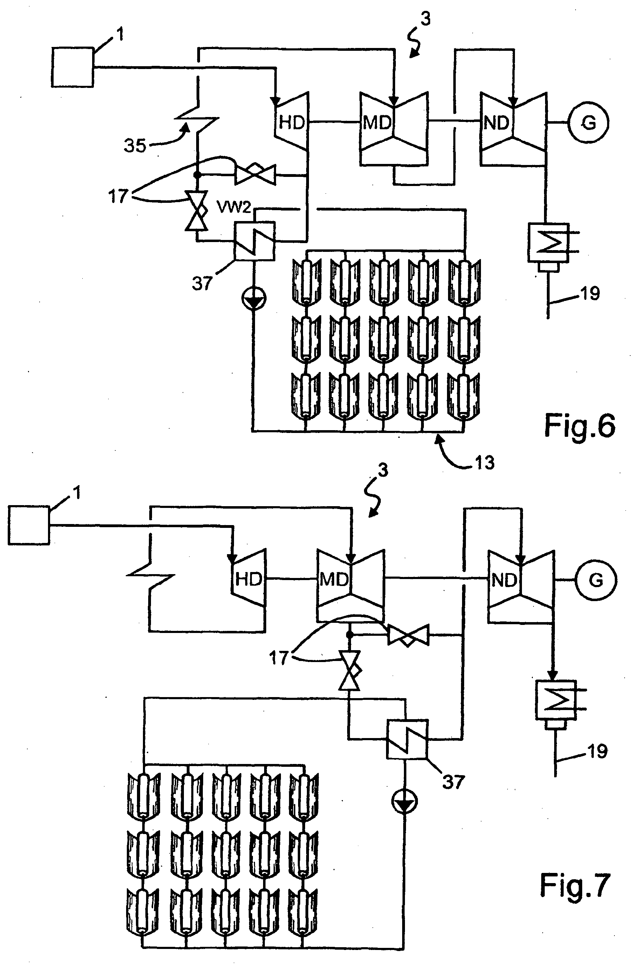

In Figur 6 ist ein weiteres Ausführungsbeispiel einer erfindungsgemäßen Einkopplung von Solarenergie in ein Dampfkraftwerk dargestellt. Dabei ist zwischen dem Hochdruckteil HD der Dampfturbine 3 und einem Mitteldruckteil MD der Dampfturbine ein Zwischenüberhitzer 35 angeordnet. Erfindungsgemäß ist zwischen dem Hochdruckteil HD der Dampfturbine 3 und dem Zwischenüberhitzer 35 ein dritter Wärmetauscher 37 angeordnet, der von einem Kollektorfeld 13 mit solar erzeugter Wärmer versorgt wird. Auch hier sind Stromventile 17 vorgesehen, die es ermöglichen, den Dampfmassenstrom durch den dritten Wärmetauscher 37 zu steuern.

In Figur 7 ist ein weiteres Ausführungsbeispiel einer Zwischenüberhitzung dargestellt. Hier wird der Dampf zwischen dem Mitteldruckteil MD und dem Niederdruckteil ND der Dampfturbine 3 einer Zwischenerhitzung in dem dritten Wärmetauscher 37 unterzogen. Auch dadurch kann wahlweise die Leistung des Kraftwerks oder der Brennstoff erhöht und/oder der Brennstoffbedarf des Kraftwerks verringert werden.

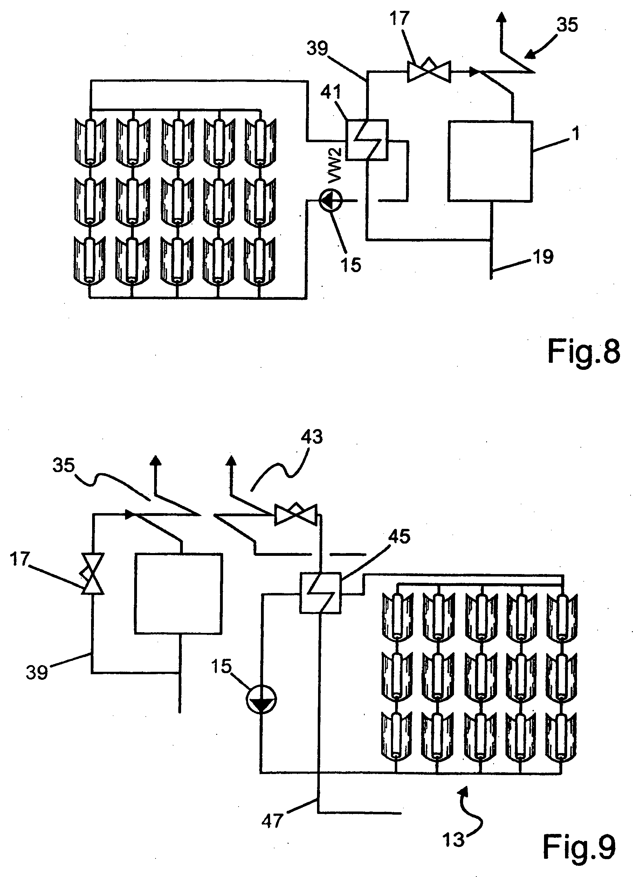

In Figur 8 ist dargestellt, wie Solarenergie in das Speisewasser, welches zur Regelung der Frischdampftemperatur in den Überhitzer 35 eingespritzt wird, erfindungsgemäß eingekoppelt werden kann.

Zu diesem Zweck ist eine Bypass-Leitung 39 vorgesehen, die von der SpeisewasserSpeisewasserleitung 19 vor deren Eintritt in den Dampferzeuger 1 abzweigt und in dem Überhitzer 35 endet, in an sich bekannter Weise vorgesehen. Um die Menge des in den Überhitzer 35 eingespritzten Kondensats steuern und vergrößern zu können, ist ein Stromventil 17 in dieser Bypass-Leitung 39 vorgesehen. Erfindungsgemäß ist in der Bypass-Leitung 39 eine vierte Wärmetauscher 41 angeordnet, der an ein Kollektorfeld 13 angeschlossen und von diesem mit solar gewonnener Wärme versorgt wird.

Dadurch, dass die Temperatur des Speisewasser oder Einspritzwassers Kondensats in dem vierten Wärmetauscher 41 angehoben wird, ist es möglich mehr Kondensat in den Überhitzer 35 einzuspritzen, um die gewünschten Dampfparameter (Druck und Temperatur) des Frischdampfs zu erreichen. Dadurch wird die zur Erzielung einer bestimmten Leistung der Dampfturbine 3 erforderliche Feuerungsleistung des Dampferzeugers 1 reduziert, was sich direkt in einer Einsparung an Brennstoff und/oder einem Leistungsanstieg niederschlägt.

In Figur 9 ist zusätzlich zu der Einspritzung in den Überhitzer 35 noch die Einspritzung von Speiswasser in einen Zwischenüberhitzer 43 dargestellt. In der Einspritzwasserleitung und in Reihe mit dem Zwischenüberhitzer 43 ist ein fünfter Wärmetauscher 45 angeordnet. Der fünfte Wärmetauscher 45 erwärmt das Speisewasser, welches über eine Speisewasserentnahmeleitung 47, die von der SpeisewasserSpeisewasserleitung 19 nach der Speisewasserpumpe 9 abzweigt wird, bevor es in den Zwischenüberhitzer 43 strömt. Auch hier ist es wieder erfindungsgemäß möglich, durch den fünften Wärmetauscher 45 solar erzeugte Wärme in den Dampfkreislauf einzukoppeln und dadurch entweder Leistung und/oder Brennstoffbedarf des Dampfkraftwerks zu optimieren.

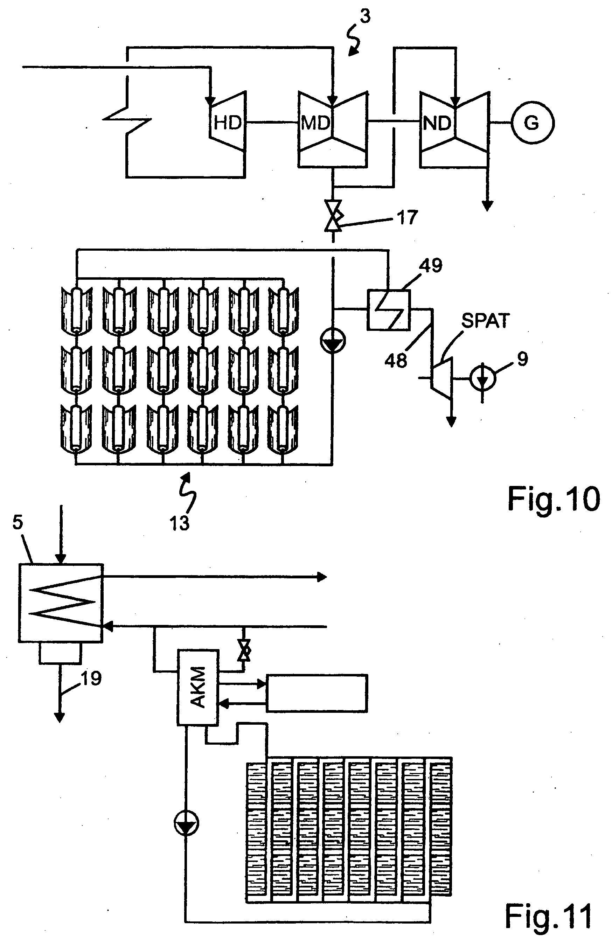

In Figur 10 ist ein Ausführungsbeispiel dargestellt, bei dem die Speisewasserpumpe 9 von einer Speisewasser-Antriebspumpenturbine SPAT angetrieben wird. Diese Speisewasser-Antriebspumpenturbine SPAT wird mit Anzapfdampf, der dem Mitteldruckteil MD der Dampfturbine 3 entnommen wird, betrieben.

Dazu wird der Mitteldruckteil MD der Dampfturbine 3 mit einer Anzapfleitung 49 versehen. In dieser Anzapfleitung 49 nach einem Stromventil 17 ein sechster Wärmetauscher 51 vorgesehen, der von einem Kollektorfeld 13 mit Solarwärme versorgt wird.

Dadurch ist es möglich, den von der Dampfturbine 3 angezapften Dampf im sechsten Wärmetauscher 51 zwischenzuüberhitzen und dadurch den Massenstrom des angezapften Dampfs zu reduzieren und dadurch die Leistung der Dampfturbine 3 zu erhöhen und/oder den Brennstoffverbrauch zu verringern.

In Figur 11 ist noch eine weitere erfindungsgemäße Möglichkeit der Einkopplung von Solarenergie in den Dampfkraftprozess dargestellt. Dabei wird mit Hilfe eines Solarkollektorfelds 13 eine Absorptionskältemaschine AKM betrieben, die wiederum das Kühlwasser für den Kondensator 5 weiter abkühlt. Dabei wird das Wasser erst dann abgekühlt, wenn es in dem Kühlturm (nicht dargestellt) des Dampfkraftwerks beziehungsweise von dem Wasser eines sich in der Nähe befindlichen Flusses (nicht dargestellt) bereits soweit wie möglich abgekühlt wurde.

Durch die weitere Abkühlung des Kühlwassers wird das Druckniveau im Kondensator 5 verringert, so dass das nutzbare Druckgefälle an der Dampfturbine 3 zunimmt und in entsprechender Weise die Leistung des Kraftwerks steigt.

In Figur 11 ist die Absorptionskältemaschine AKM im Bypass zu der Kühlmittelleitung, mit der Kondensator 5 versorgt wird, geschaltet. Es ist alternativ auch möglich, die Absorptionskältemaschine direkt in die Kühlmittelleitung zu integrieren, so dass die Absorptionskältemaschine AKM in Serie mit dem Kühlturm (nicht dargestellt) und dem Kondensator 5 geschaltet ist.

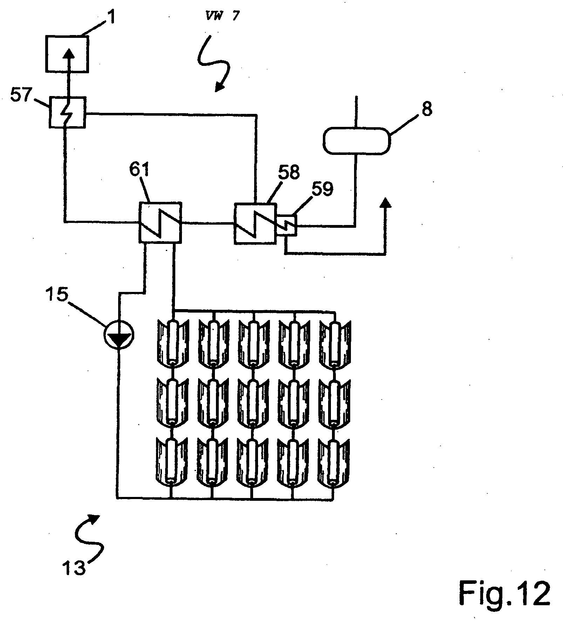

Figur 12 zeigt die serielle Einbindung eines solar gespeisten siebten Wärmetauschers 61 in einen HD-Vorwärmer. Die erfindungsgemäße serielle Einbindung sieht einen zusätzlichen, solar gespeisten Wärmetauscher 61 in der Hochdruckvorwärmstrecke vor. Um die Solarenergie thermodynamisch am effektivsten einzubinden, werden die Hauptkomponenten des letzten Hochdruckvorwärmers VWᵢ, nämlich Enthitzer 57, Kondensator 58 und Unterkühler 59, räumlich getrennt installiert. Der solar gespeiste Wärmetauscher 61 wird zwischen Enthitzer 57 und Kondensator 58 des letzten dampfgespeisten Vorwärmers VWᵢ integriert und somit das Temperaturniveau der wärmeabgebenden Medien optimal genutzt. Das Speisewasser kann somit auf ein höheres Temperaturniveau gebracht werden, bevor es in den Economizer (Eco) des Dampferzeugers 1 eintritt. Die Temperaturaufwärmspanne des Dampferzeugers 1 wird kleiner und dem Dampferzeuger 1 muss bei gleichbleibenden Dampfparametern weniger Brennstoffenergie zugeführt werden. Alternativ kann bei konstanter Feuerungswärmeleistung des Dampferzeugers 1 der Frischdampfmassenstrom und somit die Generatorleistung erhöht werden.

Bei diesem Ausführungsbeispiel wurde der letzte Vorwärmer VWᵢ in drei Unterbaugruppen aufgeteilt; nämlich einen Enthitzer 57, einen Kondensator 58 und einen Unterkühler 59. Als Kondensator 58 wird der Teil des Vorwärmers VW bezeichnet, in dem der Anzapfdampf kondensiert und seine Kondensationswärme an das Speisewasser abgibt. Besitzt das anfallende Kondensat aus dem Kondensator 58 eine höhere Temperatur als das eintretende Speisewasser, so kann durch den Unterkühler 59 das Speisewassertemperaturniveau angehoben werden; dies ist energetisch günstiger. Der Enthitzer 57 bringt den überhitzten Anzapfdampf auf Sattdampfniveau. Dabei wird dem Dampf Wärme entzogen und an das Speisewasser übertragen. Erfindungsgemäß ist nun zwischen dem Enthitzer 57 und dem Kondensator 58 ein siebter Wärmetauscher 61 vorgesehen, der die in dem Kollektorfeld 13 gewonnene solare Wärme auf das Speisewasser überträgt.

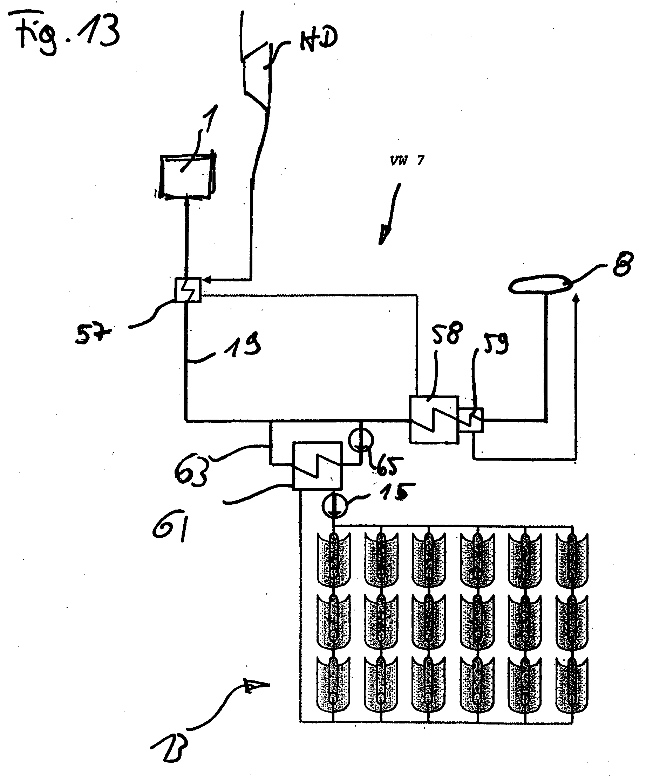

Figur 13 zeigt die parallele Einbindung eines solar gespeisten siebten Wärmetauschers 61 in einen HD-Vorwärmer. Es handelt sich gewissermaßen um eine Variante des Ausführungsbeispiels gemäß Figur 12. Daher werden nur die Unterschiede erläutert und ansonsten gilt das zu Figur 12 gesagte entsprechend.

Der siebte Wärmetauscher 61 ist mit Hilfe einer zweiten Bypass-Leitung 63 parallel zu der Speisewasserleitung 19 geschaltet. In der zweiten Bypass-Leitung 63 ist eine zusätzliche Kondensatpumpe 65 angeordnet, die einen variablen Teilstrom des in der Speisewasserleitung 19 strömenden Kondensats durch den siebten Wärmetauscher 61 fördert. Die zusätzliche Kondensatpumpe 65 kann drehzahlgeregelt sein.

Um die Aufwärmspanne des siebten Wärmetauschers 61 so steuern zu können, dass das Solarfeld 13 mit optimalem Energieertrag betrieben werden kann, wird nicht die gesamte durch die Speisewasserleitung 19 strömende Speisewassermenge aufgewärmt, sondern nur ein Teilmassenstrom. Dieser Teilmassenstrom wird durch eine geeignete Ansteuerung der regelbaren Kondensatpumpe 65 immer dem aktuellen Angebot an Solarwärme angepasst. Somit kann das Solarfeld 13 immer auf konstantem Temperaturniveau betrieben werden.

Nach dem siebten Wärmetauscher 61 werden der solar gewärmte durch die zweiten Bypass-Leitung 63 strömende Teilmassenstrom und der Rest des durch die Speisewasserleitung 19 strömenden Speisewassers zusammengeführt und es stellt sich die Mischtemperatur aus beiden Massenströmen ein. Durch die optimierte Aufwärmspanne des siebten Wärmetauschers 61 fällt der erforderliche Massenstrom durch das Solarfeld 13 geringer aus. In Folge dessen werden die Druckverluste auf Speisewasser- und Solarkreisseite und die Aufwärmverluste im Kollektorfeld reduziert.

Das in Figur 13 beschriebene Ausführungsbeispiel kann in einigen Details variiert werden. Die in Figur 13 dargestellte Verschaltung sieht vor, dass der Enthitzer 57 des letzten Vorwärmers VWi aus thermodynamischen Gründen örtlich vom letzten Kondensator 58 getrennt vor dem zusätzlichen Wärmetauscher eingebunden wird. Ist dies aus technischen Gründen oder Mangels Platz an der entsprechenden Stelle im Kraftwerk nicht möglich, kann der Enthitzer auch unverändert direkt beim Kondensationsteil 58 des Vorwärmers VW1 verbleiben.

Ist für den letzten Hochdruckvorwärmer kein Enthitzer 57 vorhanden und eine nachträgliche Installation nicht vorgesehen, wird die Solareinkopplung direkt dem Kondensationsteil 58 des letzten Vorwärmers VWi nachgeschaltet. Unter Umständen kann auch auf die Pumpe 65 in der zweiten Bypass-Leitung 63 Speisewasserteilstrom verzichtet werden.

## Patentansprüche

1. Dampfkraftwerk umfassend einen Dampferzeuger (1), eine Turbine (3), einen Kondensator (5) und mindestens einen Vorwärmer(VWᵢ), **dadurch gekennzeichnet, dass** parallel zu einem Vorwärmer (VW) mindestens ein Wärmetauscher (11, 33) vorgesehen ist, und dass in dem mindestens einen Wärmetauscher (11, 33) Wärme von einem oder mehreren Solarkollektoren (13) auf einen durch den mindestens einen Wärmetauscher (11, 33) strömende Teil-Kondensatstrom übertragen wird.

2. Dampfkraftwerk nach Anspruch 1, **dadurch gekennzeichnet, dass** mehrere in Reihe geschaltete Vorwärmer, insbesondere Niederdruck-Vorwärmer (VW1, VW2, ...) oder Hochdruck-Vorwärmer (VW6, VW7, ...) vorgesehen sind, und dass der mindestens eine Wärmetauscher (11, 33) parallel zu einem oder mehreren der Vorwärmer (VW1, VW2, ... VW7) schaltbar ist.

3. Dampfkraftwerk nach Anspruch 1 oder 2, **dadurch gekennzeichnet, dass** es, einen Überhitzer (35) und/oder einen oder mehrere Zwischen-Überhitzer (43) umfasst,), dass zur Regelung der Frischdampftemperatur in dem Überhitzer (35) und/oder zur Regelung der Temperatur des überhitzten Dampfs in dem Zwischenüberhitzer (43) Kondensat, welches über eine Bypass-Leitung (39, 27) aus der Kondensat-Leitung (19) entnommen wird, in den Überhitzer (35) und/oder die Zwischen-Überhitzer (43) eingespritzt wird, dass parallel zu der Kondensat-Leitung (19) ein vierter Wärmetauscher (41) und/oder ein fünfter Wärmetauscher (45) vorgesehen ist, und dass in dem vierten und/oder fünften Wärmetauscher (41, 45) Wärme von einem oder mehreren Solarkollektoren (13) auf das Kondensat übertragbar ist.

4. Dampfkraftwerk nach einem der vorhergehenden Ansprüche, **dadurch gekennzeichnet, dass** es eine Speisewasserpumpe (SP), eine mit Dampf betriebene Speisewasserpumpenantriebsturbine (SPAT) und eine Dampfleitung (48) zwischen der Turbine (3), insbesondere dem Mitteldruck-Teil (MD) der Turbine (3), und der Speisewasserpumpenantriebsturbine (SPAT), umfasst , dass in der Dampfleitung (48) ein sechster Wärmetauscher (49) vorgesehen ist, und dass in dem sechsten Wärmetauscher (49) Wärme von einem oder mehreren Solarkollektoren (13) auf den in der Dampfleitung (48) strömenden Dampf übertragbar ist.

5. Dampfkraftwerk nach einem der vorhergehenden Ansprüche, **dadurch gekennzeichnet, dass** es der Kondensator (5) von einem Kühlmedium, insbesondere Wasser, durchströmt wird, und dass das Kühlmedium vor dem Eintritt in den Kondensator (5) mittels eine solar betriebenen Absorptionskältemaschine (AKM) kühlbar ist.

6. Dampfkraftwerk nach einem der vorhergehenden Ansprüche, **dadurch gekennzeichnet, dass** mindestens ein zusätzlicher Hochdruck-Vorwärmer (VW6, VW7) direkt oder über einen siebten Wärmetauscher (61) von einem Wärmeträger erhitzt wird, der ein Kollektorfeld (13) durchströmt.

7. Dampfkraftwerk nach Anspruch 6, **dadurch gekennzeichnet, dass** der siebte Wärmetauscher (61) über eine zweite Bypass-Leitung (63) parallel zu der Speisewasserleitung (19) geschaltet ist, und dass in der zweiten Bypass-Leitung (63) eine Kondensatpumpe (65) oder ein Stromventil angeordnet ist.

8. Dampfkraftwerk nach einem der vorhergehenden Ansprüche, **dadurch gekennzeichnet, dass** als Solar-Kollektoren (13) konzentrierende Kollektoren, insbesondere Parabolrinnen-Kollektoren, Fresnel-Kollektoren oder Turmreceiver mit Heliostaten-Feld, oder nicht-konzentrierende Kollektoren, insbesondere Flachkollektoren oder Vakuumröhrenkollektoren, eingesetzt werden.

9. Dampfkraftwerk nach einem der vorhergehenden Ansprüche, **dadurch gekennzeichnet, dass** als Wärmeträger für die Solar-Kollektoren (13) und die warme Seite der Wärmetauscher (11, 33, 37, 41, 45, 49) Wasser oder Thermo-Öl eingesetzt wird.

10. Verfahren zum Betreiben eines Dampfkraftwerks umfassend einen Dampferzeuger (1), eine Turbine (3), einen Kondensator (5) und mindestens einen Vorwärmer (VWᵢ), und einen parallel zu dem mindestens einen Vorwärmer (VWᵢ) geschalteten Wärmetauscher (11, 33), **dadurch gekennzeichnet, dass** in dem mindestens einen Wärmetauscher (11, 33) Wärme von einem oder mehreren Solarkollektoren (13) auf den durch den mindestens einen Wärmetauscher (11, 33) strömende Teil-Kondensat oder Speisewasserstrom übertragen wird, und dass der Teil-Kondensatmassenstrom in Abhängigkeit der Austrittstemperatur des Teil-Kondensat- oder Speisewasserstroms aus dem mindestens einen Wärmetauscher (11, 33) geregelt wird.

11. Verfahren nach Anspruch 10, **dadurch gekennzeichnet, dass** der mindestens eine Wärmetauscher (11, 33) parallel zu einem oder mehreren in Reihe geschalteten Vorwärmern (VWᵢ) in Abhängigkeit der von dem mindestens einen Wärmetauscher (11, 33) auf den Teil-Kondensatmassenstrom übertragbaren Wärmeleistung geschaltet wird.

12. Verfahren nach Anspruch 10 oder 11 zum Betreiben eines Dampfkraftwerks umfassend einen Überhitzer (35) und/oder einen oder mehrere Zwischen-Überhitzer (43), wobei zur Regelung der Temperatur des überhitzten Dampfs Speisewasser, welches über eine Bypass-Leitung (39, 47) aus der Kondensat-Leitung (19) entnommen wird, in den Überhitzer (35) und/oder die Zwischen-Überhitzer (43) eingespritzt wird, **dadurch gekennzeichnet, dass** Wärme von einem oder mehreren Solarkollektoren (13) auf das Speisewasser übertagen wird, und dass dieses Kondensat zur Regelung der Frischdampftemperatur in den Überhitzer (35) und/oder der Temperatur des überhitzten Dampfs in den mindestens einen Zwischen-Überhitzer (43) eingespritzt wird.

13. Verfahren nach einem der Ansprüche 10 bis 12 zum Betreiben eines Dampfkraftwerks umfassend eine Speisewasserpumpe (9) und eine mit Dampf betriebene Speisewasserpumpenantriebsturbine (SPAT) und eine Dampfleitung (48) zwischen der Turbine (3) und der Speisewasserpumpenantriebsturbine (SPAT), **dadurch gekennzeichnet, dass** in einem sechsten Wärmetauscher (49) Wärme von einem oder mehreren Solarkollektoren (13) auf den in der Dampfleitung (48) strömenden Dampf übertragen wird.

14. Verfahren nach einem der Ansprüche 10 bis 13 zum Betreiben eines Dampfkraftwerks, wobei der Kondensator (5) von einem Kühlmedium, insbesondere Wasser, durchströmt wird, **dadurch gekennzeichnet, dass** das Kühlmedium vor dem Eintritt in den Kondensator (5) mittels einer solar betriebenen Absorptionskältemaschine (AKM) gekühlt wird.

15. Verfahren nach einem der vorhergehenden Ansprüche, **dadurch gekennzeichnet, dass** mindestens ein zusätzlicher Hochdruck-Vorwärmer (VW6, VW7) direkt oder über einen siebten Wärmetauscher (61) von einem Wärmeträger erhitzt wird, der ein Kollektorfeld (13) durchströmt.

16. Verfahren nach Anspruch 15, **dadurch gekennzeichnet, dass** der zusätzliche Hochdruck-Vorwärmer oder der siebte Wärmetauscher (61) über eine zweite Bypass-Leitung (63) parallel zu der Speisewasserleitung (19) geschaltet ist, und dass der Speisewasserstrom in der zweiten Bypass-Leitung (63) in Abhängigkeit der Temperatur eines durch das Solarfeld (13) strömenden Wärmeträgers geregelt wird.

## Claims

1. Steam power plant comprising a steam generator (1), a turbine (3), a condenser (5) and at least one pre-heater (VWᵢ), **characterized in that** there is provided, parallel to a pre-heater (VW), at least one heat exchanger (11, 33) and **in that**, in the at least one heat exchanger (11, 33), heat from one or more solar collectors (13) is transferred to a condensate partial flow flowing through the at least one heat exchanger (11, 33).

2. Steam power plant according to Claim 1, **characterized in that** multiple series-connected pre-heaters, in particular low-pressure pre-heaters (VW1, VW2, ...) or high-pressure pre-heaters (VW6, VW7, ...) are provided, and **in that** the at least one heat exchanger (11, 33) can be connected parallel to one or more of the pre-heaters (VW1, VW2, ... VW7) .

3. Steam power plant according to Claim 1 or 2, **characterized in that** it comprises a superheater (35) and/or one or more intermediate superheaters (43), **in that** in order to control the fresh steam temperature in the superheater (35) and/or in order to control the temperature of the superheated steam in the intermediate superheater (43), condensate, which is drawn from the condensate line (19) via a bypass line (39, 27), is injected into the superheater (35) and/or the intermediate superheaters (43), **in that** a fourth heat exchanger (41) and/or a fifth heat exchanger (45) is provided parallel to the condensate line (19), and **in that**, in the fourth and/or fifth heat exchanger (41, 45), heat from one or more solar collectors (13) can be transferred to the condensate.

4. Steam power plant according to one of the preceding claims, **characterized in that** it comprises a feed water pump (SP), a steam-powered feed water pump drive turbine (SPAT) and a steam line (48) between the turbine (3), in particular the intermediate-pressure section (MD) of the turbine (3), and the feed water pump drive turbine (SPAT), **in that** in the steam line (48) there is provided a sixth heat exchanger (49), and **in that** in the sixth heat exchanger (49) heat from one or more solar collectors (13) can be transferred to the steam flowing in the steam line (48).

5. Steam power plant according to one of the preceding claims, **characterized in that** a coolant, in particular water, flows through the condenser (5), and **in that** the coolant can be cooled prior to entry into the condenser (5) by means of a solar-powered absorption refrigeration machine (AKM).

6. Steam power plant according to one of the preceding claims, **characterized in that** at least one additional high-pressure pre-heater (VW6, VW7) is heated, directly or via a seventh heat exchanger (61), by a heat transfer medium that flows through a collector field (13).

7. Steam power plant according to Claim 6, **characterized in that** the seventh heat exchanger (61) is connected parallel to the feed water line (19) via a second bypass line (63), and **in that** a condensate pump (65) or a flow valve is arranged in the second bypass line (63).

8. Steam power plant according to one of the preceding claims, **characterized in that**, as solar collectors (13), use is made of concentrating collectors, in particular parabolic trough collectors, Fresnel collectors or tower receivers with a heliostat field, or non-concentrating collectors, in particular flat collectors or vacuum tube collectors.

9. Steam power plant according to one of the preceding claims, **characterized in that**, as heat transfer medium for the solar collectors (13) and the hot side of the heat exchangers (11, 33, 37, 41, 45, 49), use is made of water or thermal oil.

10. Method for operating a steam power plant comprising a steam generator (1), a turbine (3), a condenser (5) and at least one pre-heater (VWᵢ) and a heat exchanger (11, 33) connected parallel to the at least one pre-heater (VWᵢ), **characterized in that**, in the at least one heat exchanger (11, 33), heat from one or more solar collectors (13) is transferred to the condensate portion or feed water flow flowing through the at least one heat exchanger (11, 33), and **in that** the condensate mass flow portion is controlled in dependence on the outlet temperature of the condensate flow portion or feed water flow from the at least one heat exchanger (11, 33).

11. Method according to Claim 10, **characterized in that** the at least one heat exchanger (11, 33) is connected parallel to one or more series-connected pre-heaters (VWᵢ) in dependence on the heat power which can be transferred to the condensate mass flow portion by the at least one heat exchanger (11, 33).

12. Method according to Claim 10 or 11 for operating a steam power plant comprising a superheater (35) and/or one or more intermediate superheaters (43), wherein, in order to control the temperature of the superheated steam, feed water, which is drawn from the condensate line (19) via a bypass line (39, 47), is injected into the superheater (35) and/or the intermediate superheaters (43), **characterized in that** heat from one or more solar collectors (13) is transferred to the feed water, and **in that** this condensate is injected into the superheater (35) in order to control the fresh steam temperature and/or into the at least one intermediate superheater (43) in order to control the temperature of the superheated steam.

13. Method according to one of Claims 10 to 12 for operating a steam power plant comprising a feed water pump (9) and a steam-powered feed water pump drive turbine (SPAT) and a steam line (48) between the turbine (3) and the feed water pump drive turbine (SPAT), **characterized in that**, in a sixth heat exchanger (49), heat from one or more solar collectors (13) is transferred to the steam flowing in the steam line (48).

14. Method according to one of Claims 10 to 13 for operating a steam power plant, wherein a coolant, in particular water, flows through the condenser (5), **characterized in that** the coolant is cooled prior to entry into the condenser (5) by means of a solar-powered absorption refrigeration machine (AKM).

15. Method according to one of the preceding claims, **characterized in that** at least one additional high-pressure pre-heater (VW6, VW7) is heated, directly or via a seventh heat exchanger (61), by a heat transfer medium that flows through a collector field (13).

16. Method according to Claim 15, **characterized in that** the additional high-pressure pre-heater or the seventh heat exchanger (61) is connected parallel to the feed water line (19) via a second bypass line (63), and **in that** the feed water flow in the second bypass line (63) is controlled in dependence on the temperature of a heat transfer medium flowing through the solar field (13).

## Revendications

1. Centrale thermique à vapeur comprenant un générateur de vapeur (1), une turbine (3), un condenseur (5) et au moins un réchauffeur (VWᵢ), **caractérisée en ce qu'**il est prévu au moins un échangeur de chaleur (11, 33) parallèlement à un réchauffeur (VW), et **en ce que** de la chaleur est transmise dans ledit au moins un échangeur de chaleur (11, 33) d'un ou de plusieurs capteur(s) solaire(s) (13) à un courant partiel de condensat qui circule à travers ledit au moins un échangeur de chaleur (11, 33).

2. Centrale thermique à vapeur selon la revendication 1, **caractérisée en ce qu'**il est prévu plusieurs réchauffeurs installés en série, en particulier des réchauffeurs à basse pression (VW1, VW2, ...) ou des réchauffeurs à haute pression (VW6, VW7,...) et **en ce que** ledit au moins un échangeur de chaleur (11, 33) peut être connecté en parallèle avec un ou plusieurs des réchauffeurs (VW1, VW2, ..., VW7).

3. Centrale thermique à vapeur selon la revendication 1 ou 2, **caractérisée en ce qu'**elle comprend un surchauffeur (35) et/ou un ou plusieurs surchauffeurs intermédiaires (43), **en ce que**, pour la régulation de la température de la vapeur fraîche dans le surchauffeur (35) et/ou pour la régulation de la température de la vapeur surchauffée dans le surchauffeur intermédiaire (43), du condensat, qui est prélevé par une conduite de dérivation (39, 27) dans la conduite de condensat (19), est injecté dans le surchauffeur (35) et/ou dans les surchauffeurs intermédiaires (43), **en ce qu'**il est prévu un quatrième échangeur de chaleur (41) et/ou un cinquième échangeur de chaleur (45) en parallèle avec la conduite de condensat (19), et **en ce que** de la chaleur peut être transmise dans le quatrième et/ou dans le cinquième échangeur de chaleur (41, 45) d'un ou de plusieurs capteur(s) solaire(s) (13) au condensat.

4. Centrale thermique à vapeur selon l'une quelconque des revendications précédentes, **caractérisée en ce qu'**elle comprend une pompe à eau d'alimentation (SP), une turbine entraînée par de la vapeur pour l'entraînement de la pompe à eau d'alimentation (SPAT) et une conduite de vapeur (48) entre la turbine (3), en particulier la partie moyenne pression (MD) de la turbine (3), et la turbine d'entraînement de la pompe à eau d'alimentation (SPAT), **en ce qu'**il est prévu dans la conduite de vapeur (48) un sixième échangeur de chaleur (49), et **en ce que** de la chaleur peut être transmise dans le sixième échangeur de chaleur (49) d'un ou de plusieurs capteur(s) solaire(s) (13) à la vapeur qui circule dans la conduite de vapeur (48).

5. Centrale thermique à vapeur selon l'une quelconque des revendications précédentes, **caractérisée en ce que** le condenseur (5) est parcouru par un milieu de refroidissement, en particulier de l'eau, et **en ce que** le milieu de refroidissement peut être refroidi avant son entrée dans le condenseur (5) au moyen d'une machine frigorifique à absorption (AKM) entraînée par l'énergie solaire.

6. Centrale thermique à vapeur selon l'une quelconque des revendications précédentes, **caractérisée en ce qu'**au moins un réchauffeur à haute pression supplémentaire (VW6, VW7) est chauffé, directement ou par l'intermédiaire d'un septième échangeur de chaleur (61), par un porteur de chaleur qui circule à travers un champ de capteurs (13).

7. Centrale thermique à vapeur selon la revendication 6, **caractérisée en ce que** le septième échangeur de chaleur (61) est connecté par une deuxième conduite de dérivation (63) en parallèle avec la conduite d'eau d'alimentation (19), et **en ce qu'**une pompe à condensat (65) ou un régulateur de débit est disposé (e) dans la deuxième conduite de dérivation (63).

8. Centrale thermique à vapeur selon l'une quelconque des revendications précédentes, **caractérisée en ce que** l'on utilise comme capteurs solaires (13) des capteurs concentrateurs, en particulier des capteurs striés paraboliques, des capteurs de Fresnel ou des récepteurs à tour avec un champ d'héliostats, ou des capteurs non concentrateurs, en particulier des capteurs plats ou des capteurs à tube sous vide.

9. Centrale thermique à vapeur selon l'une quelconque des revendications précédentes, **caractérisée en ce que** l'on utilise comme porteur de chaleur pour les capteurs solaires (13) et le côté chaud des échangeurs de chaleur (11, 33, 37, 41, 45, 49) de l'eau ou une huile thermique.

10. Procédé de conduite d'une centrale thermique à vapeur comprenant un générateur de vapeur (1), une turbine (3), un condenseur (5) et au moins un réchauffeur (VWᵢ), et un échangeur de chaleur (11, 33) installé en parallèle avec ledit au moins un réchauffeur (VWᵢ), **caractérisé en ce que** l'on transmet dans ledit au moins un échangeur de chaleur (11, 33) de la chaleur d'un ou de plusieurs capteur(s) solaire(s) (13) au condensat partiel ou au courant d'eau d'alimentation qui circule à travers ledit au moins un échangeur de chaleur (11, 33), et **en ce que** l'on règle le débit massique de condensat partiel en fonction de la température de sortie du courant de condensat partiel ou d'eau d'alimentation hors dudit au moins un échangeur de chaleur (11, 33).

11. Procédé selon la revendication 10, **caractérisé en ce que** l'on connecte ledit au moins un échangeur de chaleur (11, 33) en parallèle avec un ou plusieurs réchauffeurs (VWᵢ) installés en série en fonction de la puissance thermique transmissible dudit au moins un échangeur de chaleur (11, 33) au courant massique de condensat partiel.

12. Procédé selon la revendication 10 ou 11 pour conduire une centrale thermique à vapeur comprenant un surchauffeur (35) et/ou un ou plusieurs surchauffeur(s) intermédiaire(s) (43), dans lequel, pour la régulation de la température de la vapeur surchauffée, on injecte de l'eau d'alimentation, que l'on prélève dans la conduite de condensat (19) au moyen d'une conduite de dérivation (39, 47), dans le surchauffeur (35) et/ou dans les surchauffeurs intermédiaires (43), **caractérisé en ce que** l'on transmet de la chaleur d'un ou de plusieurs capteur(s) solaire(s) (13) à l'eau d'alimentation, et **en ce que** l'on injecte ce condensat dans le surchauffeur (35) pour la régulation de la température de la vapeur fraîche et/ou dans ledit au moins un surchauffeur intermédiaire (43) pour la régulation de la température de la vapeur surchauffée.

13. Procédé selon l'une quelconque des revendications 10 à 12 pour la conduite d'une centrale thermique à vapeur comprenant une pompe à eau d'alimentation (9) et une turbine entraînée par de la vapeur pour l'entraînement de la pompe à eau d'alimentation (SPAT) et une conduite de vapeur (48) entre la turbine (3) et la turbine d'entraînement de la pompe à eau d'alimentation (SPAT), **caractérisé en ce que** de la chaleur est transmise dans un sixième échangeur de chaleur (49) d'un ou de plusieurs capteur(s) solaire(s) (13) à la vapeur qui circule dans la conduite de vapeur (48) .

14. Procédé selon l'une quelconque des revendications 10 à 13 pour la conduite d'une centrale thermique à vapeur, dans lequel le condenseur (5) est parcouru par un milieu de refroidissement, en particulier de l'eau, **caractérisé en ce que** l'on refroidit le milieu de refroidissement avant son entrée dans le condenseur (5) au moyen d'une machine frigorifique à absorption (AKM) entraînée par l'énergie solaire.

15. Procédé selon l'une quelconque des revendications précédentes, **caractérisé en ce qu'**au moins un réchauffeur à haute pression supplémentaire (VW6, VW7) est chauffé directement ou par l'intermédiaire d'un septième échangeur de chaleur (61) par un porteur de chaleur, qui circule à travers un champ de capteurs (13) .

16. Procédé selon la revendication 15, **caractérisé en ce que** le réchauffeur à haute pression supplémentaire ou le septième échangeur de chaleur (61) est connecté en parallèle avec la conduite d'eau d'alimentation (19) par l'intermédiaire d'une deuxième conduite de dérivation (63) et **en ce que** le courant d'eau d'alimentation dans la deuxième conduire de dérivation (63) est réglé en fonction de la température d'un porteur de chaleur circulant à travers le champ de capteurs solaires (13).
